# EUROPÄISCHE PATENTSCHRIFT

(11) **EP 2 657 686 B1**
(45) Veröffentlichungstag und Bekanntmachung des Hinweises auf die Patenterteilung: **14.08.2019**
(21) Anmeldenummer: 12165720.9
(22) Anmeldetag: 26.04.2012
(51) Int. Cl.: G01N 21/47

(54) **Vorrichtung zum Erfassen von Streulicht mit rotierendem Prisma**
Device for detecting scattered light with a rotating prism
Dispositif de détection de lumière diffusée avec un prisme rotatif

(43) Veröffentlichungstag der Anmeldung: 30.10.2013
(73) Patentinhaber: Brodmann Technologies GmbH, 76476 Bischweier (DE)
(72) Erfinder: Brodmann, Rainer, 76476 Bischweier (DE); Brodmann, Boris, 76131 Karlsruhe (DE)
(74) Vertreter: Schaumburg und Partner Patentanwälte mbB

(56) Entgegenhaltungen:
- EP-A2- 0 323 845
- DE-A1- 2 738 569
- DE-B3-102005 047 328
- US-A- 4 470 698
- US-A- 4 637 718
- US-A- 4 728 196
- US-A- 5 677 763
- US-A1- 2004 016 896
- US-A1- 2008 024 790
- OULAMARA A ET AL: "Optical surface inspection using a transverse speckle detection technique", OPTICS COMMUNICATIONS, NORTH-HOLLAND PUBLISHING CO. AMSTERDAM, NL, Bd. 67, Nr. 1, 1. Juni 1988 (1988-06-01), Seiten 34-38, XP024477331, ISSN: 0030-4018, DOI: 10.1016/0030-4018(88)90084-3 [gefunden am 1988-06-01]

## Beschreibung

Die Erfindung betrifft eine Vorrichtung zum Erfassen von Streulicht, das von einer Probe reflektiert wird, mit einer in einem Gehäuse angeordneten Lichtquelle, deren Licht die Probe beleuchtet, und mit einem im Gehäuse angeordneten Detektor, der entlang einer Zeile eine Vielzahl von fotoempfindlichen Detektor-Elementen hat und dem das von der Probe reflektierte Streulicht zuführbar ist.

Mit Hilfe einer solchen Vorrichtung kann ein Winkel aufgelöstes Streulichtverfahren durchgeführt werden, das mit hoher Messgeschwindigkeit zur Überwachung von Fertigungsprozessen und zur Erfassung von Oberflächenkenngrößen dient. Gemessen wird die Winkelverteilung der Oberfläche über das gemessene rückgestreute Licht. Hieraus können sowohl Kennwerte für die Mikrostruktur der Oberfläche als auch Formmerkmale, wie z.B. Rundheit, Rattermarken, etc., berechnet werden (vgl. hierzu VDA 2009).

Vorrichtungen zum Erfassen von Streulicht zur Beurteilung von Oberflächen sind seit längerem bekannt und haben sich in der Praxis bewährt. Aus der DE 30 37 622 C2 ist eine Einrichtung zur Bestimmung der Oberflächengüte bekannt, bei der mit einer Lichtquelle eine zu untersuchende Oberfläche beleuchtet und das reflektierte Licht einer Reihe von zeilenförmig angeordneten Detektoren zugeführt wird. Die Ausgangssignale der Detektoren werden nach statistischen Methoden ausgewertet und dabei Kennwerte ermittelt, die die untersuchte Oberfläche charakterisieren. Durch Drehung der Messebene kann die Richtungsabhängigkeit des Reflexionsverhaltens von Oberflächen mit gerichteter, anisotroper Rauheitsstruktur festgestellt werden.

Die DE 33 37 468 C2 beschreibt eine Vorrichtung zur Ermittlung von Kenngrößen für die Oberflächenstruktur, die ebenfalls aus der Streulichtverteilung ermittelt werden. Bei Verwendung einer zeilenförmigen Detektoranordnung wird vorgeschlagen, diese zu drehen, um die flächenhafte Streulichtverteilung zu ermitteln.

Die EP 0 210 263 B1 beschreibt eine Vorrichtung zur Ermittlung von Gestaltsfehlern niedriger Ordnung, wie z.B. Unebenheiten, Wellen, Rillen, Rattermarken. Es wird die Streulichtverteilung mit Hilfe von Lichtempfangselementen nach statistischen Methoden ausgewertet und daraus auf die Oberflächenkenngrößen geschlossen. Durch Verdrehung der Achse einer Lichtempfangselement-Zeile gegen die Abtastrichtung kann die Winkelempfindlichkeit der Messvorrichtung gesteigert werden.

Die vorgenannten Vorrichtungen des Standes der Technik ermitteln die Streulichtverteilung nur entlang einer Dimension, nämlich in zeilenrichtung der zeilenförmig angeordneten Detektor-Elemente. Dies hat den Vorteil, dass die gesamte Vorrichtung, auch Streulichtsensor genannt, eine kompakte Bauweise hat, die erforderlich ist, um als In-Line-Messgerät in der Fertigung oder an Prüfplätzen eingesetzt zu werden. Auf diese Weise kann die Oberflächenrauheit bzw. Oberflächengestalt in einer Richtung mit relativ hoher Genauigkeit bestimmt werden. In der realen Praxis ist die Rauheit oder die Textur der Oberfläche nicht nur in einer Richtung von Bedeutung, sondern es wäre vorteilhaft, die von Oberflächenstrukturen, z.B. der Längsrauheit und/oder der Querrauheit hervorgerufene Streulichtverteilung zu ermitteln, um daraus auf Oberflächenstrukturen und Oberflächenfehler schließen zu können.

US 2004/016896 A1 beschreibt eine Vorrichtung zur optischen Oberflächeninspektion. Das von einer Lichtquelle auf die Oberfläche einfallende Licht wird über ein Dove-Prisma, das als Bild-Rotator dient, zugeführt und das von der Oberfläche des zu prüfenden Objektes reflektierte Licht wird über dasselbe Dove-Prisma einem Detektor zugeleitet, der eine Vielzahl von Detektor-Elementen enthalten kann. Das zu prüfende Objekt, z.B. ein Halbleiter-Waver, dreht sich auf einem Drehteller, wodurch sich auch die vom Detektor empfangene Lichtverteilung verdreht. Um diese Verdrehung zu kompensieren, wird das Dove-Prisma mit halber Drehgeschwindigkeit des Messobjekts verdreht, wodurch ein stehendes Bild von den Detektor-Elementen erfasst wird. Weiterhin wird in diesem Dokument eine Relais-Optik beschrieben. Diese Relais-Optik ist ortsfest angeordnet und dreht sich nicht mit dem Dove-Prisma.

US-A-5,677,763 beschreibt eine optische Einrichtung zum Vermessen eines Objektes, wobei ein Detektor mit mehreren Detektor-Elementen den Umriss eines zu prüfenden Objektes erfasst. Die Vorrichtung umfasst ein Dove-Prisma, das bei Rotation es einer Detektor-Zeile ermöglicht, den vollständigen Umriss eines Objektes durch Bilddrehung zu erfassen. Das Dove-Prisma wird mit Hilfe eines Schrittmotors oder eines DC-Motors oder eines AC-Motors in Rotation versetzt.

US 2008/0024790 A1 beschreibt eine Bildrotations-Vorrichtung zur optischen Inspektion von Objekten, beispielsweise einem Halbleiter-Waver. Um stehende Bilder zu erzeugen, enthält die Vorrichtung ein drehendes Dove-Prisma, dessen Drehgeschwindigkeit entgegengesetzt der Drehung des zu prüfenden Objektes ist.

EP 0 323 845 A2 beschreibt eine Vorrichtung zur Drehung eines zu übertragenden Bildes in einem optischen System zum genauen Fokussieren zweier Lichtstrahlen auf einem Objekt, insbesondere einer optischen Disk. Mithilfe eines verdrehbaren Dove-Prismas werden die einfallenden Lichtstrahlen so gesteuert, dass sie auf vorbestimmten Spuren der optischen Disk justiert sind. Die von der optischen Disk reflektierten Lichtstrahlen werden Detektoren zugeführt, aus deren Signalen Steuersignale für das zu drehende Dove-Prisma ermittelt werden.

US-A-4,470,698 betrifft eine Abtast-Vorrichtung für ein optisches Radar. Zur Erzeugung unterschiedlicher Strahlkeulen für das Abtasten werden zwei Keil-Optiken verwendet, wobei jede Keil-Optik innerhalb einer Hohlwelle eines Hohlwellenmotors aufgenommen und mit der jeweiligen Hohlwelle rotiert. Durch Einstellen unterschiedlicher Drehgeschwindigkeiten kann die optische Abtastkeule in ihrer Form variiert werden.

US 4,637,718 A beschreibt eine optische Abtastvorrichtung und umfasst die Merkmale des Oberbegriffs des Anspruchs 1. Dieses Dokument beschreibt einen optischen Scanner, mit dessen Hilfe alpha-numerische Zeichen auf einem Produkt gelesen werden können. Das Bild mit den alpha-numerischen Zeichen wird über ein rotierendes Dove-Prisma einer Dioden-Zeile zugeführt, so dass die flächenhaften Bildinformationen der optischen Gegenstandsebene ausgelesen werden können.

DE 27 38 569 A1 beschreibt eine optische Flaschenprüfvorrichtung mit einer Abtastung des Flaschenbodens auf Fremdkörper. In einer Ausführungsform wird eine Radialabtastung durch eine hohle Motorwelle, umfassend ein Trapez-Prisma und zwei Kollimatorlinsen realisiert, wobei sich die Motorwelle im Läufer eines Motors befindet.

DE 10 2005 047 328 B3 beschreibt einen rotierenden Tubus mit Bildrotator und integrierten optischen Elementen für die Materialbearbeitung mittels Laserstrahlen. Um den Aufbau einfach zu halten, wird der Tubus in einem Hohlmotor angeordnet.

Es ist Aufgabe der Erfindung, eine Vorrichtung zum Erfassen von Streulicht von zu prüfenden Oberflächen anzugeben, die eine räumliche Auswertung der Streulichtverteilung zum Ermitteln von Kennwerten für die Mikrostruktur der Oberfläche bei einer kompakten Bauform der Vorrichtung mit hoher Genauigkeit ermöglicht.

Diese Aufgabe wird durch eine Vorrichtung nach dem Anspruch 1 gelöst. Vorteilhafte Weiterbildungen sind in den abhängigen Ansprüchen angegeben.

Gemäß der Erfindung ist in einem Gehäuse der Vorrichtung eine Lichtquelle angeordnet, deren Licht die Probe beleuchtet. Das Licht kann Strahlung im sichtbaren und im nicht sichtbaren Bereich, z.B. UV-Licht oder IR-Licht, umfassen und kann auf einen eingeengten Spektralbereich oder auch breitbandig sein. In dem Gehäuse ist ein Detektor angeordnet, der entlang einer Zeile eine Vielzahl von fotoempfindlichen Detektor-Elementen hat und dem das von der Probe reflektierte Streulicht zuführbar ist. Die Verwendung eines zeilenförmigen Detektors hat den Vorteil, dass der beanspruchte Raum relativ klein ist, so dass eine kompakte Bauform auch bei einem relativ großen Streuwinkelbereich möglich ist. Außerdem haben sich zeilenförmige Detektor-Elemente, beispielsweise in der Form eines Linear-Arrays aus Silicium-Fotodioden, in der Praxis gut bewährt und besitzen ein geringes Rauschen sowie ein hohes Nutzsignal-Rausch-Verhältnis. In einem drehbar gelagerten Tubus ist ein Bild-Rotator angeordnet, wobei das von der Lichtquelle auf die Probe einfallende Licht und das reflektierte Streulicht den Bild-Rotator durchsetzen. Der Bild-Rotator bewirkt beim Drehen des Tubus, dass sich auch die vom Messfleck auf der Probe ausgehende Streulichtkeule, auch Streulicht-Indikatrix genannt, dreht, so dass auf die Zeile der Detektor-Elemente eine vom Drehwinkel abhängige Streulichtverteilung auftrifft. Wenn die Streulichtverteilung sich um 360° gedreht hat, so kann mit den fotoempfindlichen Detektor-Elementen innerhalb des empfangbaren Streuwinkelbereichs eine vollständige räumliche Streulicht-Indikatrix aufgenommen werden.

Die Signale der fotoempfindlichen Detektorelemente werden abhängig vom Drehwinkel des Tubus einer Analyseeinheit zugeführt, die die Signale auswertet. Diese Auswertung kann nach den in der VDA 2009 bzw. den weiter oben genannten Dokumenten nach statistischen Methoden erfolgen. Man erhält dann abhängig vom Drehwinkel Kenngrößen, die sich aus der vollständigen räumlichen Streulicht-Indikatrix ergeben, woraus auf die Drehwinkel abhängige Oberflächenstruktur der untersuchten Oberfläche und seine Textur sowie auf richtungsabhängige Oberflächenfehler geschlossen werden kann.

Bei der Erfindung ist der Bild-Rotator als Dove-Prisma ausgebildet. Das Dove-Prisma hat die Eigenschaft, ein Bild entlang seiner Längsachse doppelt so schnell zu drehen, wie es selbst um seine Drehachse gedreht wird. Das Prisma, insbesondere das Dove-Prisma, ist nun so anzuordnen, dass der auf die Probe einfallende Lichtstrahl in seiner Form beim Drehen nicht geändert wird. Die vom Messfleck ausgehende Streulichtkeule wird mit doppelter Drehgeschwindigkeit der Drehung des Prismas gedreht, so dass dem zeilenförmigen Detektor beim Verdrehen des Tubus um 180° die vollständige räumliche Streulichtverteilung zugeführt wird.

Gemäß der Erfindung ist im Tubus eine Relais-Optik angeordnet ist. Diese Relais-Optik, z.B. bestehend aus einem in Richtung der optischen Achse vor dem Bild-Rotator angeordneten Linse und eine nach dem Bild-Rotator angeordneten Linse, dient zur Vermeidung von Abberationen durch das Prisma. Die Relais-Optik verlagert den Messort in eine größere Entfernung ohne Veränderung des Abbildungsmaßstabes und ohne Veränderung der Streuwinkel-Skalierung. Typischerweise werden zwei gleiche Linsen in symmetrischer Anordnung benutzt. Zwischen beiden Linsen befindet sich das Prisma, z.B. das Dove-Prisma, in einem kollimierten Strahlengebiet.

Weiterhin ist bei der Erfindung der Tubus von einer Hohlwelle eines Hohlwellenmotors aufgenommen ist. Der Hohlwellenmotor dient als Antrieb zur Drehung des Tubus. Sein Rotor umfasst eine innen hohle Welle, in die der Tubus eingesetzt ist. Bei Drehung des Rotors wird auch der Tubus um seine Längsachse und damit das in ihm enthaltene Prisma um seine Längsachse verdreht. Die von der Probe rückgestreute Streulichtkeule wird mit der doppelten Drehgeschwindigkeit gedreht, so dass bei der zeilenförmigen Erfassung durch den Detektor im beobachtbaren Winkelbereich die gesamte räumliche Verteilung des Streulichtes erfasst wird.

Weiterhin ist bei der Erfindung ein Rotationssensor vorgesehen, der den Drehwinkel des Tubus bei seiner Rotation erfasst und ein entsprechendes Signal der Analyseeinheit zuführt. Beispielsweise kann der Rotationssensor als Encoder-Scheibe ausgebildet sein, dessen Hell/Dunkel-Markierungen auf dem Umfang der Scheibe durch einen Reflex-Sensor erfasst werden. Anhand des Signals wird die Drehlage der Streu-Indikatrix in Bezug auf die Ausrichtung der Vorrichtung ermittelt, so dass auf die Strukturrichtung der untersuchten Oberfläche geschlossen werden kann.

Vorteilhaft ist es, wenn der Tubus in einem Vorsatz-Modul aufgenommen ist, welches austauschbar mit dem Gehäuse verbindbar ist. Im Gehäuse sind der Detektor und die Lichtquelle zusammen mit optischen Bauteilen fest angeordnet. Außerdem befindet sich in dem Gehäuse eine Detektor-Auswerteelektronik, die die Signale der fotoempfindlichen Detektor-Elemente ohne Einkopplung von Störsignalen mit einer hohen Taktrate erfassen. An dieses Gehäuse können nun verschiedene Vorsatz-Module ngebracht werden. Diese Vorsatz-Module sind an bestimmte Anwendungsfälle optimal angepasst, beispielsweise im Hinblick auf den erfassbaren Streuwinkelbereich, eine bestimmte geometrische Form des Abtastkopfes etc.. Im vorliegenden Fall sind der Tubus, der Hohlwellenmotor, der Rotationssensor und zugehörige Elemente im Vorsatz-Modul aufgenommen, welches gegen ein anderes Vorsatz-Modul ausgetauscht werden kann.

Ausführungsbeispiele der Erfindung werden nachfolgend anhand der Figuren erläutert. Darin zeigt:
- Figur 1: eine schematische Darstellung der Vorrichtung zum Erfassen von Streulicht,
- Figur 2: eine schematische Darstellung optischer und optoelektronischer Elemente der Vorrichtung,
- Figur 3: den Strahlengang im Tubus mit Dove-Prisma und Relais-Optik,
- Figur 4: die Streulichtverteilung hervorgerufen durch Querrauheit bzw. Längsrauheit,
- Figur 5: den Zusammenhang von Streulichtverteilung und Oberflächenprofil bei einer geschliffenen Oberfläche,
- Figur 6: den Zusammenhang von Streulichtverteilung und Oberfläche bei einem Drehprofil,
- Figur 7: ein Blockschaltbild zur Auswertung der gemessenen Streulichtverteilung, und
- Figur 8: eine mit der Vorrichtung aufgenommene räumliche Streulichtverteilung.

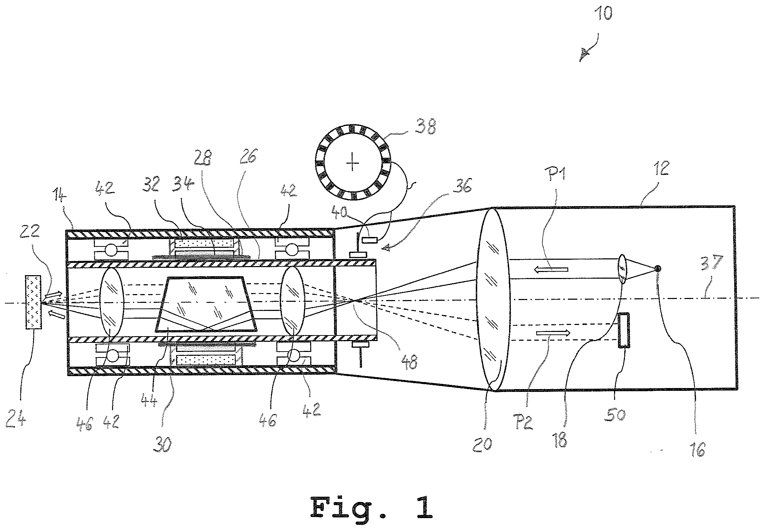

Figur 1 zeigt ein Ausführungsbeispiel einer Vorrichtung 10 zum Erfassen von Streulicht. Diese Vorrichtung 10 umfasst ein Sensorgehäuse 12, an welches ein Vorsatz-Modul 14 austauschbar befestigt ist. Innerhalb des Sensorgehäuses 12 ist eine Lichtquelle 16 angeordnet, vorzugsweise eine lichtemittierende Diode LED oder eine Laserdiode. Bevorzugt wird eine LED mit isotrop strahlender Leuchtfläche, die eine gleichmäßige Abstrahlcharakteristik hat. Das ausgesendete Licht kann im IR-Bereich liegen. Jedoch sind auch andere Spektralbereiche möglich. Beispielsweise können auch sogenannte Super-LEDs eingesetzt werden, die spektral breitbandiges Licht, z.B. weißes Licht, abstrahlen.

Das von der Lichtquelle 16 divergent abgestrahlte Licht wird durch einen Kollimator 18 parallelisiert und trifft in Pfeilrichtung P1 auf ein Fourier-Objektiv 20. Die Brennweite des Kollimators 18 bestimmt zusammen mit der Brennweite des Fourier-Objektivs 20 den Abbildungsmaßstab für die Leuchtfläche der Lichtquelle, z.B. die Leuchtfläche der LED. Aus diesem Abbildungsmaßstab ergibt sich die Größe eines Messflecks 22 auf der zu untersuchenden Probe 24. Die Größe des Messflecks kann zusätzlich durch Variation der Kollimatorbrennweite und dem Leuchtflächendurchmesser der Lichtquelle, beispielsweise auch durch Einstellung mittels einer Blende, variiert werden.

Das Vorsatz-Modul 14 ist mit Hilfe eines Flansches (nicht dargestellt), am Gehäuse 12 austauschbar befestigt. Es enthält einen Tubus 26, der von einer Hohlwelle 28 eines Hohlwellenmotors 30 aufgenommen ist. Der Hohlwellenmotor 30 umfasst eine Statorwicklung 32 und einen Rotormagneten 34 oder eine Rohrwicklung. Im angetriebenen Zustand rotiert die Hohlwelle 28 um eine Mittelachse 37 und damit auch der Tubus 26. Ein Rotationssensor 36 erfasst den Drehwinkel des Tubus 26 bzw. der Hohlwelle 28 und führt einer Analyseeinheit (nicht dargestellt) ein entsprechendes Signal zu. Der Rotationssensor 36 umfasst bei diesem Beispiel eine Encoder-Scheibe 38 mit Hell/Dunkel-Markierungen, die von einem Reflexsensor 40 abgetastet werden. Die Encoder-Scheibe 38 ist am Umfang des Tubus 26 befestigt, und der Reflexsensor 40 ist ortsfest angeordnet. Falls die im Hohlwellenmotor 30 vorhandene Lagerung der Hohlwelle nicht ausreicht, können weitere Lager 42 vorgesehen sein, um den Tubus 26 zu lagern.

Im Inneren des Tubus 26 ist als Bildrotator ein Dove-Prisma 44 sowie eine Relais-Optik umfassend zwei Linsen 46 angeordnet. Dieses Dove-Prisma 44 dreht das Bild entlang seiner Längsachse doppelt so schnell wie es selbst um seine Längsachse gedreht wird. Diese Eigenschaft wird hier genutzt, um das von der Oberfläche der Probe 24 reflektierte Strahlenbündel zu drehen. Zur Vermeidung von Abberationen beim Einsatz des Dove-Prismas 44 in einem divergenten Strahlengang dient die Relais-Optik mit den beiden Linsen 46. Diese Linsen 46 werden in symmetrischer Anordnung benutzt. Die erste Linse 46 bildet ein vom Kollimator 18 und dem Fourier-Objekt 20 entworfene Luftbild 48 der LED 16 ins Unendliche ab. Die nachfolgende zweite Linse 46 erzeugt eine Rückabbildung vom Unendlichen auf den Messfleck 22. Zwischen beiden Linsen 46 befindet sich das Dove-Prisma 44 in einem kollimierten Strahlengebiet, so dass durch die Verwendung achsparallelen Lichtes der Astigmatismus des Dove-Prismas 44 reduziert wird. Der Abbildungsmaßstab wird durch die Relais-Optik nicht verändert. Die Strecke zwischen den beiden Linsen 46 kann in Grenzen frei gewählt werden, so dass eine optimale Anpassung an die Abmessungen des Dove-Prismas 44 und der Tubuslänge erreicht wird.

Die vom Messfleck 22 rückgestreute Strahlung durchsetzt die Relais-Optik und das Dove-Prisma 44 und trifft auf das Fourier-Objektiv 20. Dieses Fourier-Objektiv 20 transformiert den Streuwinkel in eine radiale Wegstrecke um. Das Streulicht trifft gemäß Pfeil P2 auf einen zeilenförmigen Detektor 50, dessen Zeilenrichtung senkrecht zur Papierebene der Figur 1 verläuft. Bei Drehung der Hohlwelle 28 um 180° dreht sich die Streulichtverteilung ausgehend vom Messfleck 22 um 360°, so dass dem Detektor 50 eine vollständige räumliche Streulichtkeule innerhalb des vorgegebenen rotationssymmetrischen Winkelerfassungsbereichs zugeführt wird. Der Detektor 50 ist vorzugsweise als Linear-Detektorarray mit einer Vielzahl von Fotodioden (z.B. 32, 64, 128 Fotodioden) ausgebildet. Die Signale dieser Fotodioden werden von einer im Gehäuse 12 angeordneten Auswerteelektronik (nicht dargestellt) mit hoher Geschwindigkeit abgetastet. Die Anordnung der Auswerteelektronik in dem Gehäuse 12 hat den Vorteil, dass kaum Störsignale eingekoppelt werden. Die Verwendung von Silicium-Fotodioden hat den Vorteil, dass diese einen sehr geringen Dunkelstrom haben, geringes Rauschen zeigen und dadurch ein hohes Nutz-Störsignalverhältnis haben. Zusätzlich haben diese Fotodioden einen geringen Temperaturgang, so dass sie mit hoher Reproduzierbarkeit das empfangene Streulicht und mit hoher Auflösung in elektrische Signale wandeln.

Vorzugsweise ist vor den Detektor 50 ein Bandpassfilter (nicht dargestellt) angebracht, dessen Durchlassbereich spektral an das von der Lichtquelle 16, beispielsweise eine LED, angepasst ist. Auf diese Weise wird eine Störsignalunterdrückung von Fremdlicht, z.B. auch Tageslicht, erreicht. Außerdem kann vor den Detektor 50 eine Blende angeordnet sein, welche die azimutale Auflösung der erfassten räumlichen Streulichtverteilung verbessert. Als weitere Möglichkeit kann vor den Detektor eine Zylinderlinse angeordnet sein, die den Erfassungsbereich für Streustrahlung vergrößert.

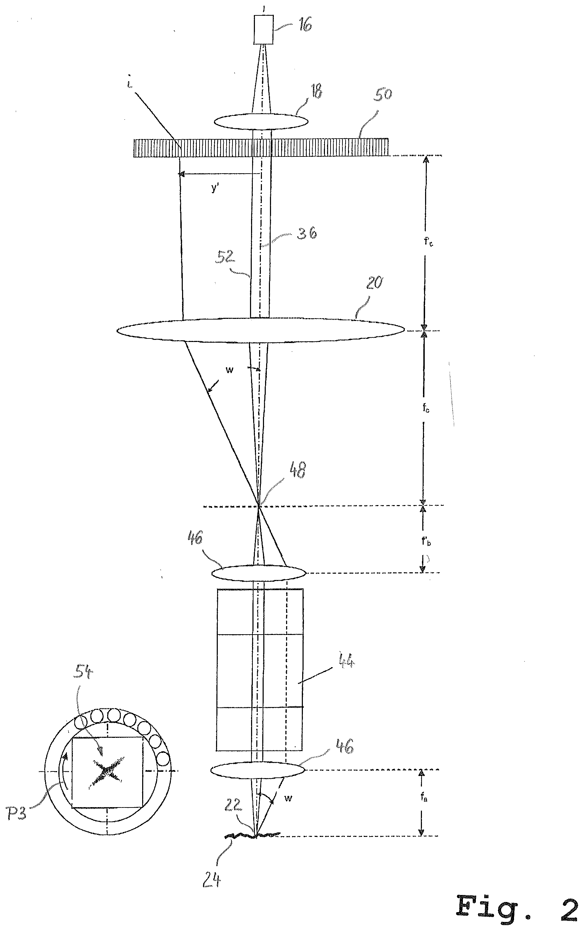

Figur 2 zeigt schematisch optische und optoelektronische Elemente der Vorrichtung nach Figur 1, jedoch um 90° gedreht. Gleiche Teile sind gleich bezeichnet.

Der zeilenförmige Detektor 50 mit seinen Detektor-Elementen (eines ist mit der Laufvariablen i bezeichnet) liegt bei dieser Darstellung in der Papierebene. Der Detektor hat von dem Fourier-Objektiv 20 einen Abstand f_{c} gleich der Brennweite des Fourier-Objektivs 20. Das Luftbild 48 der Leuchtfläche der Lichtquelle 16 entsteht im Abstand der Brennweite f_{c}. Die Relais-Optik mit den Linsen 46 überträgt dieses Luftbild 48 als Messfleck 22 auf die Oberfläche der Probe 24, wobei die Brennweiten der Linsen 46 f_{b} und fₐ maßgeblich sind, die vorzugsweise gleich groß sind. Das von der Lichtquelle 16 herkommende einfallende Lichtbündel 52 beleuchtet den Messfleck 22. Streustrahlung im Winkel w wird über die Relais-Optik 46 und das Dove-Prisma 44 zum Fourier-Objektiv 20 übertragen, welches den Winkel w transformiert in die radiale Strecke yy', so dass der eingezeichnete Strahl auf das Detektor-Element i fällt und dort in ein elektrisches Signal gewandelt wird. Bei Rotation des Dove-Prismas 44, wie dies anhand des Drehpfeils P3 schematisch in Figur 2 links dargestellt ist, verdreht sich auch die von der Oberfläche der Probe 24 rückgestreute Streu-Indikatrix 54. Bei einer schnellen Abtastung der Detektor-Elemente des Detektors 50 kann abhängig vom Drehwinkel die gesamte räumliche Streu-Indikatrix 54 erfasst und in elektrische Signale gewandelt werden.

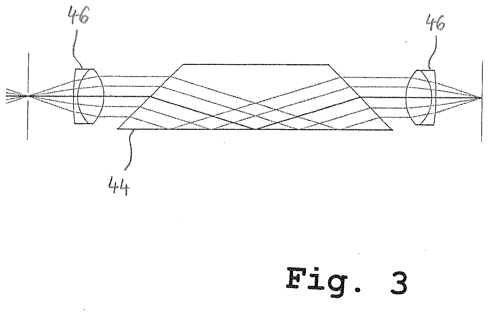

Figur 3 zeigt schematisch das Dove-Prisma 44 und die durch die Linsen 46, 46 gebildete Relais-Optik. Das Dove-Prisma 44 ist ein Prisma mit der Grundfläche eines Trapezes mit um 45° geneigten Seitenflächen. Trifft ein entlang der Längsachse des Dove-Prismas 44 verlaufender durch die Linse 46 kollimierter Lichtstrahl auf eine der geneigten Einfallsflächen, so wird er zunächst in das Dove-Prisma 44 hineingebrochen und auf die längste Seite des Prismas geleitet. Dort erfährt der Lichtstrahl eine Totalreflexion und wird auf die zweite schräge Fläche geleitet, wo er aus dem Dove-Prisma 44 austritt. Der Strahlverlauf nach dem Dove-Prisma 44 entspricht der optischen Achse des einfallenden Strahls, jedoch erfährt das Bild durch die Reflexion innerhalb des Dove-Prismas 44 eine Spiegelung parallel zur reflektierenden Fläche. Auf diese Weise ergibt sich für ein Bild eine Drehung um die Längsachse des Dove-Prismas 44, was bei der vorliegenden Erfindung zur Drehung der Streulicht-Indikatrix bzw. der Streulichtkeule genutzt wird.

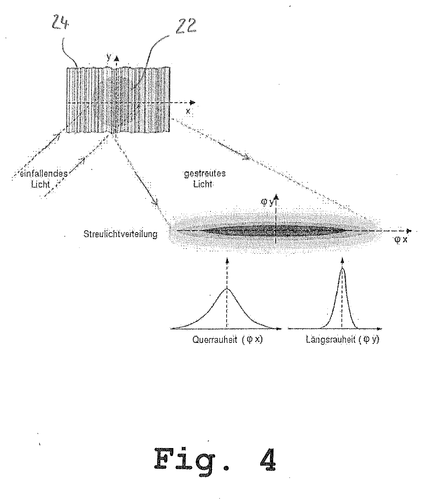

Figur 4 zeigt anhand einer schematischen Darstellung das bei der vorliegenden Erfindung angewendete Grundprinzip der Streulicht-Messtechnik nach der ARS-Methode (Angular Resolved Scattering). Sie dient zur Oberflächencharakterisierung, wobei das auf einen Messfleck 22 einer Probe 24 einfallende Licht in einen Winkelbereich als Streulichtverteilung gestreut wird. Legt man in die Probe 24 ein x,y-Koordinatensystem, so erkennt man anhand der Streulichtverteilung in Richtung ϕx und ϕy den engen Zusammenhang zwischen Querrauheit bzw. Längsrauheit und der zugehörigen Streulichtverteilung. Aus der Intensitätsverteilung des Streulichts in Richtung ϕx bzw. ϕy kann durch Bildung entsprechender Kenngrößen auf Rauheitskenngrößen der Oberfläche der Probe 24 geschlossen werden. In Figur 4 fällt das einfallende Licht unter einem schrägen Winkel ein. Analoge Verhältnisse gelten jedoch auch bei senkrechtem Einfall des Lichtes, wie dies in den Figuren 1 und 2 gezeigt ist.

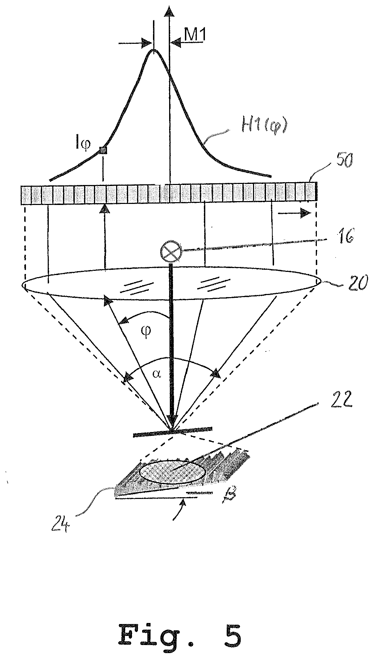

Figur 5 zeigt das Grundprinzip der Ermittlung von Kenngrößen auf der Grundlage der winkelaufgelösten Streulicht-Methode. Die zu messende Probe 24 hat im vorliegenden Fall ein stochastisches Schleifprofil. Die zu messende Oberfläche wird senkrecht mit Strahlung der Lichtquelle 16, typischerweise eine LED, in einem Messfleck 22 mit einem vorgegebenen (und variierbaren) Durchmesser beleuchtet und das rückgestreute Licht wird innerhalb eines maximal messbaren Streuwinkelbereichs α von dem Fourier-Objektiv 20 erfasst. Der Detektor 50 ist mit seiner Anzahl von Detektor-Elementen so angeordnet, dass die einzelnen Detektor-Elemente zu den diskreten Streuwinkelwerten ϕ die entsprechenden Intensitätswerte I_{ϕ} liefern. Durch Normierung erhält man eine lineare winkelaufgelöste Streulichtverteilung H1 (ϕ), welche Informationen über die Mikrostruktur der Oberfläche erhält. Außerdem erhält man Informationen über die Gestaltabweichung niederer Ordnung (z.B. Form) ausgedrückt im Verkippwinkel β, welcher eine Verschiebung der Intensitätswerte um die Größe M1 bewirkt. Die Streulichtverteilung I_{ϕ} und damit ermittelbare Oberflächenkenngrößen hängen von verschiedenen Sensorparametern ab, nämlich dem Messfleckdurchmesser (z.B. 0,3, oder 0,9 mm Durchmesser), dem Öffnungswinkel α des Fourier-Objektivs 20 (z.B. 32°), der Anzahl der Detektor-Elemente des Detektors 50 (z.B. Detektorauflösung 1°). Aus der Streulichtverteilung I_{ϕ} können Kenngrößen, wie z.B. Aq, Ask, Aku, etc., über die Oberfläche ermittelt werden, wie sie in der Richtlinie VDA 2009 beschrieben sind.

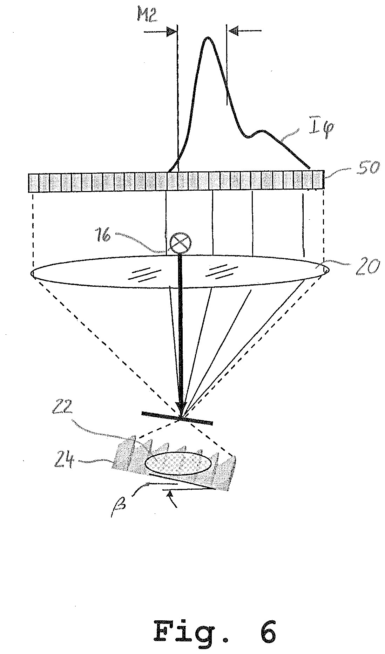

Figur 6 zeigt eine weitere Probe 24, die im Messfleck 22 ein asymmetrisches Drehprofil aufweist. Wie zu erkennen ist, ist die Streulichtverteilung I_{ϕ} ebenso asymmetrisch. Aufgrund der Verkippung um den Winkel β ergibt sich eine Verschiebung M2 der Streulichtverteilung I_{ϕ}. Aus dieser Streulichtverteilung I_{ϕ} werden sodann Kenngrößen für die Oberfläche der Probe 24 ermittelt.

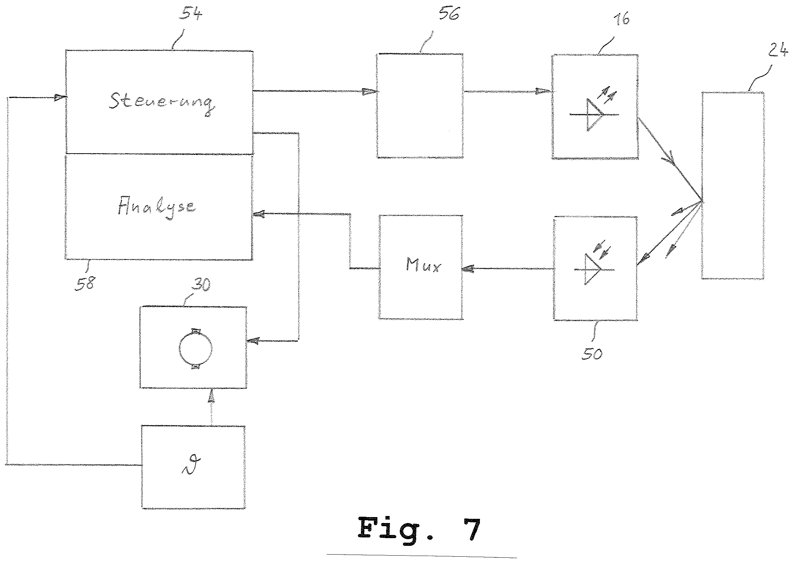

Figur 7 zeigt ein Blockschaltbild eines mit der Vorrichtung 10 arbeitenden Messsystems. Eine Steuerung 54 steuert eine Stromquelle 56 an, die die als LED ausgebildete Lichtquelle 16 mit Strom versorgt. Das Licht der LED gelangt zur Probe 24, deren Streulichtverteilung von den Detektor-Elemeten des Detektors 50 in elektrische Signale gewandelt wird. Ein Multiplexbaustein Mux tastet die Detektor-Elemente nacheinander ab und wandelt die analogen Messsignale in Digitalsignale um, die einer Analyseeinheit 58 zugeführt werden. Die Steuerung steuert den Hohlwellenmotor 30 an, dessen Rotation vom Rotationssensor 36 als Drehwinkel ϑ erfasst und der Steuerung 54 zugeführt wird. Die Analyseeinheit 58 und die Steuerung 54 sind zu einem computerisierten Messplatz zusammengefasst. Die Messwerterfassung ist so aufgebaut, dass selbst bei einer Drehung des Hohlwellenmotors 30 mit 1000 Umdrehungen je Minute Streulichtverteilungen in Abständen von ϑ = 5° Winkelgrad erfasst werden können. Auf diese Weise ermittelt die Analyseeinheit nicht nur Kennwerte aus der Intensitätsverteilung I_{ϕ} sondern aus der räumlichen Intensitätsverteilung I_{ϕ,ϑ}. Aufgrund der hohen Abtastgeschwindigkeit (typischer Wert 10000 Messungen der Intensitätsverteilungungen I_{ϕ} pro Sekunde) und der hohen Rotationsgeschwindigkeit können mit der Vorrichtung Oberflächen vollständig in kurzer Zeit abgetastet werden. Hierbei können Oberflächenkennwerte zur Charakterisierung der dreidimensionalen Oberflächenstruktur und der Textur, Texturfehler und Oberflächendefekte oder Oberflächenfehler mit hoher Genauigkeit erfassbar werden. Diese Geschwindigkeit der Abtastung kann noch gesteigert werden, wenn eine Datenübertragung mittels Ethernet erfolgt.

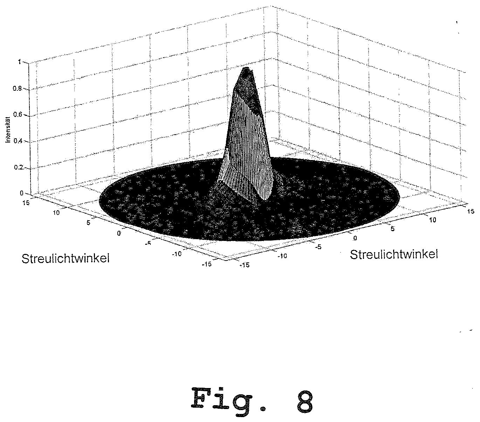

Figur 8 zeigt eine Darstellung einer räumlichen Streulichtverteilung bzw. einer Streulichtkeule, wie sie mit der Vorrichtung nach der Erfindung gemessen werden kann. Anhand dieser dreidimensionalen Streulichtverteilung können Kennwerte ermittelt werden, welche die dreidimensionale Oberflächenstruktur der untersuchten Probe kennzeichnen.

### Bezugszeichenliste

- 10: Vorrichtung zum Erfassen von Streulicht
- 12: Sensorgehäuse, Gehäuse
- 14: Vorsatz-Modul
- 16: Lichtquelle
- 18: Kollimator
- P1: Pfeilrichtung des einfallenden Lichtes
- 20: Fourier-Objektiv
- 22: Messfleck
- 24: Probe
- 26: Tubus
- 28: Hohlwelle
- 30: Hohlwellenmotor
- 32: Statorwicklung
- 34: Rotormagnet
- 36: Rotationssensor
- 37: Mittelachse
- 38: Encoder-Scheibe
- 40: Reflexsensor
- 42: Lager
- 44: Dove-Prisma
- 46: Linsen einer Relais-Optik
- 48: Luftbild
- P2: Streulicht
- 50: Detektor
- fₐ, f_{b}, f_{c}: Brennweiten
- w: Winkel
- y': radiale Strecke
- i: Detektor-Element
- P3: Drehpfeil
- 54: Streu-Indikatrix
- 54: Steuerung
- 56: Stromquelle
- ϑ: Drehwinkel
- 58: Analyseeinheit

## Patentansprüche

1. Vorrichtung zum Erfassen von Streulicht, das von einer Probe (24) reflektiert wird, umfassend
ein Gehäuse (12),
eine in dem Gehäuse angeordnete Lichtquelle (16), deren Licht die Probe (24) beleuchtet,
einen im Gehäuse (12) angeordneten Detektor (50), der entlang einer Zeile eine Vielzahl von fotoempfindlichen Detektor-Elementen hat und dem das von der Probe (24) reflektierte Streulicht zuführbar ist, einen drehbar gelagerten Tubus (26), in welchem eine Relaisoptik (46) und ein als Dove-Prisma (44) ausgebildeter Bild-Rotator angeordnet sind, wobei das von der Lichtquelle (16) auf die Probe (24) einfallende Licht und das reflektierte Streulicht den Bild-Rotator (44) durchsetzen, und eine Analyseeinheit (58), die eingerichtet ist die ihr zugeführten Signale der fotoempfindlichen Detektor-Elemente auszuwerten, **dadurch gekennzeichnet, dass** die Vorrichtung einen Kollimator (18), ein Fourier-Objektiv (20) und eine Hohlwelle (28) umfasst, wobei
das von der Lichtquelle (16) divergent abgestrahlte Licht durch den Kollimator (18) parallelisiert wird und das Fourier-Objektiv (20) durchsetzt,
dass das reflektierte Streulicht in Rückwärtsrichtung das Fourier-Objektiv (20) durchsetzt, welches das Streulicht den Detektor-Elementen zuführt, dass die Vorrichtung einen Hohlwellenmotor (30) umfasst, wobei der Tubus (26) von der Hohlwelle (28) des Hohlwellenmotors (30) aufgenommen ist,
dass die Vorrichtung einen Rotationssensor (36) umfasst, der eingerichtet ist den Drehwinkel des Tubus (26) zu erfassen und ein entsprechendes Signal der Analyseeinheit (58) zuzuführen,
und dass die Analyseeinheit (58) eingerichtet ist die Signale der fotoempfindlichen Detektor-Elemente abhängig vom Drehwinkel des Tubus (26) auszuwerten und daraus Kennwerte für die Mikrostruktur der Oberfläche der Probe zu berechnen.

2. Vorrichtung nach einem der vorhergehenden Ansprüche, bei der sie ein Vorsatz-Modul (14) umfasst, wobei der Tubus (26) in dem Vorsatz-Modul (14) aufgenommen ist, welches austauschbar mit dem Gehäuse (12) verbindbar ist.

3. Vorrichtung nach einem der vorhergehenden Ansprüche, bei der der Detektor (50) als Fotodiodenzeile ausgebildet ist.

4. Vorrichtung nach einem der vorhergehenden Ansprüche, bei der sie eine Blende umfasst, wobei vor dem Detektor (50) die Blende mit vorbestimmter rechteckiger Öffnung angeordnet ist, durch die die azimutale Auflösung der Streulichtverteilung einstellbar ist.

5. Vorrichtung nach einem der vorhergehenden Ansprüche, bei der die Lichtquelle (16) und der Detektor (50) in Nebeneinanderstellung symmetrisch zu einer Mittelachse (37) im Gehäuse (12) angeordnet sind.

## Claims

1. Apparatus for detecting scattered light reflected from a sample (24) comprising a housing (12),
a light source (16) which is arranged in the housing and whose light illuminates the sample (24),
a detector (50) arranged in the housing (12), which detector has a plurality of photosensitive detector elements along one line and to which the scattered light reflected by the sample (24) can be supplied,
a rotatably mounted tube (26) in which a relay optic (46) and an image rotator in the form of a Dove prism (44) are arranged,
wherein the light incident on the sample (24) from the light source (16) and the reflected scattered light pass through the image rotator (44),
and an analysis unit (58) adapted to evaluate the signals of the photosensitive detector elements supplied thereto,
is **characterized by**
in that the device comprises a collimator (18), a Fourier lens (20) and a hollow shaft (28), wherein
the light divergently radiated from the light source (16) is parallelized by the collimator (18) and passes through the Fourier objective (20),
in that the reflected scattered light passes through the Fourier objective (20) in the reverse direction, which supplies the scattered light to the detector elements,
in that the device comprises a hollow shaft motor (30), the tube (26) being received by the hollow shaft (28) of the hollow shaft motor (30),
in that the apparatus comprises a rotation sensor (36) which is arranged to detect the angle of rotation of the tube (26)
and supplying a corresponding signal to the analysis unit (58),
and in that the analysis unit (58) is arranged to
to evaluate the signals of the photosensitive detector elements as a function of the rotation angle of the tube (26) and to calculate therefrom characteristic values for the microstructure of the surface of the sample.

2. A device according to one of the preceding claims, in which it comprises an attachment module (14), the tube (26) being housed in the attachment module (14) which is exchangeably connectable to the housing (12).

3. Device according to one of the preceding claims, in which the detector (50) is designed as a photodiode array.

4. Device according to one of the preceding claims, in which it comprises a diaphragm, the diaphragm being arranged in front of the detector (50) with a predetermined rectangular opening through which the azimuthal resolution of the scattered light distribution can be adjusted.

5. Device according to one of the preceding claims, in which the light source (16) and the detector (50) are arranged in juxtaposition symmetrically with respect to a central axis (37) in the housing (12).

## Revendications

1. Appareil pour détecter la lumière diffusée réfléchie par un échantillon (24) comprenant
un boîtier (12),
une source lumineuse (16) qui est disposée dans le boîtier et dont la lumière éclaire l'échantillon (24),
un détecteur (50) disposé dans le boîtier (12), lequel détecteur comporte une pluralité d'éléments détecteurs photosensibles le long d'une ligne et auquel la lumière diffusée réfléchie par l'échantillon (24) peut être amenée,
un tube monté rotatif (26) dans lequel une optique de relais (46) et un rotateur d'image sous la forme d'un prisme Dove (44) sont disposés,
dans laquelle la lumière incidente sur l'échantillon (24) provenant de la source de lumière (16) et la lumière diffusée réfléchie passent à travers le rotateur d'image (44),
et une unité d'analyse (58) adaptée pour évaluer les signaux des éléments détecteurs photosensibles qui lui sont fournis,
se **caractérise par**
en ce que le dispositif comprend un collimateur (18), une lentille de Fourier (20) et un arbre creux (28), où
la lumière rayonnée de manière divergente par la source de lumière (16) est parallélisée par le collimateur (18) et traverse l'objectif de Fourier (20),
en ce que la lumière diffusée réfléchie traverse l'objectif de Fourier (20) dans la direction inverse, qui fournit la lumière diffusée aux éléments détecteurs,
en ce que le dispositif comprend un moteur à arbre creux (30), le tube (26) étant reçu par l'arbre creux (28) du moteur à arbre creux (30),
en ce que l'appareil comprend un capteur de rotation (36) qui est agencé pour détecter l'angle de rotation du tube (26)
et fournir un signal correspondant à l'unité d'analyse (58),
et en ce que l'unité d'analyse (58) est agencée pour
pour évaluer les signaux des éléments détecteurs photosensibles en fonction de l'angle de rotation du tube (26) et pour calculer à partir de là des valeurs caractéristiques pour la microstructure de la surface de l'échantillon.

2. Dispositif selon l'une des revendications précédentes, dans lequel il comprend un module de fixation (14), le tube (26) étant logé dans le module de fixation (14) qui peut être relié de manière interchangeable au boîtier (12).

3. Dispositif selon l'une des revendications précédentes, dans lequel le détecteur (50) est conçu comme un réseau de photodiodes.

4. Dispositif selon l'une des revendications précédentes, dans lequel il comprend un diaphragme, le diaphragme étant disposé devant le détecteur (50) avec une ouverture rectangulaire prédéterminée à travers laquelle la résolution azimutale de la distribution de la lumière diffusée peut être réglée.

5. Dispositif selon l'une des revendications précédentes, dans lequel la source lumineuse (16) et le détecteur (50) sont disposés symétriquement par rapport à un axe central (37) du boîtier (12).
